# EUROPÄISCHE PATENTANMELDUNG

(11) **EP 3 770 454 A1**
(43) Veröffentlichungstag der Anmeldung: **27.01.2021**
(21) Anmeldenummer: 20186865.0
(22) Anmeldetag: 21.07.2020
(51) Int. Cl.: F16D 1/02, F16D 1/10, F16D 67/00, F16D 65/12, F16D 55/28, F16D 1/08

(54) **ANORDNUNG MIT EINER WELLENKUPPLUNG UND EINEM BREMSROTOR**

(30) Priorität: 22.07.2019 DE 102019119780
(71) Anmelder: Breuell & Hilgenfeldt GmbH, 22844 Norderstedt (DE)
(72) Erfinder: Michel, Robert, 22844 Norderstedt (DE); Klahn, Michael, 22844 Norderstedt (DE)
(74) Vertreter: RGTH

(57) **Zusammenfassung**

Um eine Wellenbremskupplung (100), insbesondere für ein Fahrzeug, zu verbessern, welche, insbesondere im Betrieb, nicht schaltbar ist, durch welche eine Abtriebswelle (50) einer Antriebseinheit (150) und eine Antriebswelle (60) einer Prozesseinheit (160) miteinander verbindbar sind, wobei zwischen Antriebseinheit (150) und Prozesseinheit (160) eine Bremsvorrichtung (200) angeordnet ist, wird vorgeschlagen, dass ein Bremsenrotor (21) der Bremsvorrichtung (200) über die Wellenbremskupplung (100) mit der Abtriebswelle (50) und der Antriebswelle (60) rotationsfest verbunden ist und die Wellenbremskupplung nicht durch eine eigene Lagerung fixiert ist.

## Beschreibung

Die Erfindung betrifft eine Wellenbremskupplung welche, insbesondere im Betrieb, nicht schaltbar ist, durch welche eine Abtriebswelle einer Antriebseinheit und eine Antriebswelle einer Prozesseinheit miteinander verbindbar sind, wobei zwischen Antriebseinheit und Prozesseinheit eine Bremsvorrichtung angeordnet ist und die Wellenbremskupplung nicht durch eine eigene Lagerung fixiert ist.

### Stand der Technik

Die Kraftübertragung einer Antriebseinheit zu einer Prozesseinheit erfolgt üblicherweise durch eine Kupplung, beispielsweise eine Wellenkupplung. Die Kupplung verbindet dabei die Abtriebswelle der Antriebseinheit und die Antriebswelle der Prozesseinheit miteinander.

Häufig wird für einen Prozess neben der Antriebsmaschine auch eine Bremse benötigt. Diese wird üblicherweise mit einem vergleichbaren Kupplungselement, welches auch als Bremsenmitnehmer bezeichnet wird, entweder an eine Welle der Prozesseinheit oder an eine Welle der Antriebseinheit gekoppelt. Dabei werden generell zwei getrennte Kupplungselemente verwendet, eines zum Verbinden der beiden Wellenenden und ein weiteres zur Anbindung der Bremsvorrichtung. Weiter existieren direkt in die Prozesseinheit oder in die Antriebseinheit integrierte Bremsen wie beispielsweise Konusläufer-Motoren.

Neben der Kupplung als einfachem Maschinenelement zum starren, drehsteifen oder elastischen Verbinden zweier Wellenenden, existieren im Betrieb schaltbare Kupplungen beispielsweise zum Trennen des Kraftflusses vor einem Gangwechsel oder im Überlastfall. Schaltbare Kupplungen sind erheblich kosten- und bauraumintensiver als nichtschaltbare Kupplungen und mit diesen nicht zu vergleichen.

Eine schaltbare Kupplung mit Bremsvorrichtung wird beispielsweise in der US 3,976,174 A beschrieben, welche eine Kupplungsanordnung mit darin integrierter Getriebebremse beschreibt, welche zwischen einem Motor und einem Getriebe angeordnet ist. Die Bremsvorrichtung umfasst dabei eine befestigte Bremsbacke und drehbare Bremsplatten, welche an der Kupplung befestigt sind und mit dieser rotieren können. Die Kupplung ist dabei jedoch eine schaltbare Kupplung, kann also zwischen verschiedenen Getriebeübersetzungen wechseln und die Bremsvorrichtung kann nicht im geschlossenen Zustand der Kupplung betätigt werden.

In der EP 0 787 635 A2 wird ein Antriebsstrang mit einem Motor, einem Getriebe und zugehörigen Wellenstümpfen mit einer dazwischen angeordneten schaltbaren Kupplung beschrieben, wobei die Kupplung zwei Kupplungsscheiben umfasst, wobei eine Kupplungsscheibe als Bremsscheibe einer Bremsvorrichtung ausgebildet ist. Hierbei können jedoch Kupplung und Bremsvorrichtung nicht unabhängig voneinander bedient werden, da die Kupplung gleichzeitig die Bremsscheibe ist.

### Darstellung der Erfindung: Aufgabe, Lösung und Vorteile

Für die mittelbare Anbindung einer Antriebseinheit sowie einer Bremse an eine Prozesseinheit, ist es aus Bauraum- und Kostengründen wünschenswert alle drei Einheiten mit einer gemeinsamen Wellenbremskupplung zu verbinden. Die Aufgabe der vorliegenden Erfindung ist daher eine Wellenbremskupplung zu schaffen, welche kompakt gebaut ist, um wenig Bauraum einzunehmen, aus wenigen Bauteilen besteht, um einfach montiert werden zu können, und preiswert zu realisieren ist.

Dies kann durch eine Wellenbremskupplung gelöst werden, welche sowohl die Funktion der Antriebskupplung als Verbindung zwischen der Abtriebs- und Antriebswelle erfüllt, als auch eine Anbindung der Bremsvorrichtung ermöglicht, also als Bremsenmitnehmer fungiert. Anstatt zwei getrennter Kupplungen mit unterschiedlichen Funktionen kann ein Bauteil beziehungsweise eine Baugruppe verwendet werden. Durch die Wellenbremskupplung können zudem die Antriebseinheit und die Prozesseinheit über die Abtriebs- beziehungsweise Antriebswelle einfach miteinander verbunden oder voneinander gelöst werden, was die Montage beziehungsweise Demontage der Antriebseinheit und Prozesseinheit vereinfacht, da beide getrennt gebaut und unkompliziert am Fahrzeug verbunden werden können. Eine weitere Aufgabe solcher Wellenbremskupplungen kann die Schaffung von axialen, radialen oder/und rotativen Freiheitsgaden sein.

Eine Wellenkupplung zwischen Abtriebswelle und Antriebswelle bei gleichzeitiger Notwendigkeit einer Bremsvorrichtung kann also dadurch verbessert werden, dass ein Bremsenrotor der Bremsvorrichtung über die Wellenbremskupplung mit der Abtriebswelle und der Antriebswelle rotationsfest verbunden ist.

Erfindungsgemäß wird dabei über die Wellenbremskupplung, durch welche die Abtriebswelle einer Antriebseinheit und die Antriebswelle einer Prozesseinheit miteinander verbindbar sind, wobei zwischen Antriebseinheit und Prozesseinheit eine Bremsvorrichtung angeordnet ist, der Bremsenrotor der Bremsvorrichtung mit der Abtriebs- und der Antriebswelle verbunden. Dies wird erreicht, indem die Wellenbremskupplung die Abtriebswelle einer Antriebseinheit, die Antriebswelle einer Prozesseinheit und den Bremsenrotor einer zwischen beiden Einheiten angeordneten Bremsvorrichtung rotationsfest unmittelbar miteinander verbindet. Die Wellenbremskupplung wird dabei insbesondere für ein Fahrzeug, im Speziellen ein Kraftfahrzeug beziehungsweise ein Flurförderzeug oder ein fahrerloses Transportsystem, ausgelegt, wobei auch eine Arbeitsmaschine, also eine Maschine, welche einen mechanischen Prozess ausführt, damit ausgestattet werden kann. Die Arbeitsmaschine beziehungsweise das Fahrzeug beziehungsweise generell die Einheit, in der die Wellenbremskupplung angebracht ist, kann in zwei Einheiten unterteilt werden: eine Antriebseinheit, bevorzugt ein Elektromotor, ein Elektrogetriebemotor oder ein anderer Antrieb, und eine Prozesseinheit eines mechanischen Prozesses, welche die mechanische Arbeit verrichtet, beispielsweise ein Getriebe, ein Rad, eine Pumpe, ein Lüfter, eine Spindel, eine Presse oder ein Sensor.

Die Antriebseinheit und Prozesseinheit können dabei an ihrer Abtriebsbeziehungsweise Antriebswelle über die Wellenbremskupplung miteinander verbunden werden, um die Kraftübertragung der Antriebseinheit über die Wellen zur Prozesseinheit sicherzustellen. Die Abtriebswelle ist dabei die Welle, welche mit dem Antrieb beziehungsweise dem Motor der Arbeitsmaschine verbunden ist, die Antriebswelle diejenige Welle, welche mit der Prozesseinheit verbunden ist und die Kraft des Antriebs zum mechanischen Prozess beziehungsweise zur Prozesseinheit überträgt. Die Wellenbremskupplung ist dabei vorzugsweise ein mechanisches Verbindungselement zum starren, drehsteifen oder elastischen Verbinden zweier Wellenenden. Dadurch, dass die Wellenbremskupplung kein schaltbares Maschinenelement ist, ist sie demnach einfach eine Verbindung, welche sowohl mit der Abtriebswelle als auch mit der Antriebswelle sowie dem Bremsenrotor verbunden ist, wobei diese Verbindung vorzugsweise mit einer Welle fest ausgeformt ist, beispielsweise aufgepresst oder geklebt ist, und mit der anderen Welle sowie dem Bremsenrotor lösbar verbunden sein kann, beispielsweise über eine Verzahnung oder eine Steckverbindung. Die Wellenbremskupplung kann einteilig, zweiteilig, dreiteilig oder mehrteilig ausgeführt sein. Die Wellenbremskupplung kann an der Antriebs- und / oder der Abtriebswelle und / oder dem Bremsenrotor durch Pressen und / oder Kleben und / oder Schrauben und / oder Klemmen und/ oder Schweißen und / oder formschlüssig befestigt werden. Alternativ können Teile der Wellenbremskupplung auch durch Ausformungen der Antriebs- und/oder der Abtriebswelle und /oder des Bremsenrotors realisiert werden.

Die Bremsvorrichtung ist dabei über ihren Bremsenrotor an die Wellenbremskupplung angebunden und somit mit der Abtriebswelle und der Antriebswelle rotationsfest verbunden. Vorzugsweise ist der Bremsenrotor dabei über eine Verzahnung im Zentrum der Scheibe formschlüssig mit einer Verzahnung auf der Außenseite der Wellenbremskupplung oder des Wellenbremskupplungsgehäuses verbunden.

Bevorzugterweise ist die Wellenbremskupplung nicht selbst gelagert. Beispielsweise kann die Wellenbremskupplung fest mit der Antriebs- oder Abtriebswelle oder dem Bremsenrotor verbunden sein und über diese oder diesen gelagert werden.

Vorzugsweise ist/sind die Abtriebswelle und/oder die Antriebswelle und/oder der Bremsenrotor der Bremsvorrichtung gegenüber der Wellenbremskupplung axial in Drehachsenrichtung verschiebbar. Die axiale Verschiebbarkeit wird beispielsweise zum Lüften, also zum Lösen, der Bremsvorrichtung benötigt, da hierbei eine axiale Verschiebbarkeit des Bremsenrotors gegenüber der mit dem Bremsenrotor verbundenen Welle beziehungsweise den darum herum angeordneten Bauteilen notwendig ist. Dabei kann die axiale Verschiebbarkeit entweder zwischen dem Bremsenrotor und der Wellenbremskupplung oder zwischen dem Bremsenrotor und der Abtriebswelle oder zwischen dem Bremsenrotor und der Antriebswelle ausgeformt sein. Die Bremsvorrichtung umfasst dabei einen Bremsenrotor, beispielsweise eine Bremsscheibe, und einen Bremsenstator, beispielsweise eine Magnetspule. Vorzugsweise ist die Bremsvorrichtung eine Federkraftbremse.

Bevorzugterweise sind die Abtriebswelle, die Antriebswelle oder der Bremsrotor mit der Wellenbremskupplung kraftschlüssig und/oder formschlüssig und/oder stoffschlüssig verbunden und/oder einteilig ausgeformt. Die Verbindung beziehungsweise die Verbindungen können lösbar oder nicht lösbar ausgeformt sein. Vorzugsweise ist eine lösbare Verbindung jedoch im Betrieb nicht lösbar ausgeformt, also nur bei Montage oder Demontage lösbar. Unter einer formschlüssigen Verbindung kann man beispielsweise eine Verbindung über eine Passfeder, eine Verzahnung, einen Splint oder einen Querbolzen verstehen, aber auch zwei ineinandersteckbare Enden. Bei einer solchen Steckverbindung hat ein Ende eine Ausnehmung in einer nicht runden Form, beispielsweise vieleckig oder polygonförmig, wobei das Ende des anderen Bauteils in der Form der Ausnehmung komplementär hervorsteht, damit beide als Steckverbindung rotationsfest verbunden werden können. Vorteilhafterweise ist eine Steckverbindung zwischen Wellenbremskupplung und Antriebswelle gegeben. Eine kraftschlüssige Verbindung ist beispielsweise eine Verbindung durch Klemmen, Pressen, Schrauben oder Schrumpfen. Eine stoffschlüssige Verbindung ist durch Kleben, Schweißen oder Löten möglich. Zudem kann die Wellenbremskupplung auch Bestandteil einer der Wellen sein, also einteilig mit der Abtriebswelle oder der Antriebswelle ausgeformt werden. Bevorzugterweise kann die Wellenbremskupplung dabei auf dem Rohr einer Welle aufgepresst oder aufgeklebt sein, wobei die andere Welle über eine Verzahnung oder eine Steckverbindung angeschlossen wird.

In einer bevorzugten Ausführung erfolgt die Bremsanbindung der Bremsvorrichtung über die Außenfläche des Kupplungskörpers beziehungsweise der Wellenbremskupplung, beispielsweise über die Außenfläche des Kupplungsgehäuses, bevorzugt über eine an der Außenfläche des Kupplungsgehäuses angeordnete Verzahnung. Vorzugsweise ist die Bremsvorrichtung dabei an einer anderen Stelle verbunden, als das der Antriebswelle zugewandte Ende, an welchem die Wellenbremskupplung vorzugsweise über eine Steckverbindung mit der Antriebswelle verbunden ist.

Besonders bevorzugt ist die Bremsanbindung in einem Bereich eines vergrößerten Durchmessers der Außenfläche des Kupplungskörpers im Vergleich mit dem Durchmesser der Abtriebs- und/oder Antriebswelle angebracht. Im Vergleich zu einer minimal dicken Welle ist die Wellenbremskupplung beziehungsweise die Außenfläche des Kupplungskörpers mit einer Durchmessererhöhung verbunden, wobei im Bereich des vergrößerten Durchmessers die Außenfläche des Kupplungskörpers vorteilhaft eine Verzahnung aufweist, die als Bremsmitnehmer genutzt werden kann. Der Bereich des vergrößerten Durchmessers der Wellenbremskupplung ist demnach bevorzugterweise außen verzahnt. Der Bremsenrotor ist ebenfalls vorzugsweise verzahnt und, beispielsweise über die Verzahnung an der Außenfläche des Kupplungskörpers, mit dem Kupplungskörper rotationsfest verbindbar. Die Außenfläche des Kupplungskörpers umfasst dabei einen Bereich, welcher das verzahnte Gegenstück des Bremsenrotors ist, ist also als Verzahnung ausgebildet ist, welcher komplementär zur Verzahnung des Bremsenrotors ist, mit welchem der Bremsenrotor ineinander greift. Besonders bevorzugt ist die Bremsvorrichtung eine Federkraftbremse.

Vorzugsweise ist die Antriebswelle das Sonnenrad eines Getriebes, welches in der Prozesseinheit angeordnet ist. Dabei kann die Antriebswelle auf Seite der Prozesseinheit eine Verzahnung aufweisen, welche mit den Getrieberädern in der Prozesseinheit kämmt. Auf Seite der Antriebseinheit beziehungsweise der Wellenbremskupplung kann die Antriebswelle ein polygonförmiges Ende aufweisen, welches formschlüssig mit einer polygonförmigen Ausnehmung in der Wellenbremskupplung durch eine Steckverbindung verbunden werden kann. Alternativ kann die Wellenbremskupplung auch einteilig mit der Antriebswelle ausgeformt sein, wobei das der Antriebseinheit zugewandte Ende der Antriebswelle die Wellenbremskupplung bildet.

Bevorzugterweise umfasst die Wellenbremskupplung auf der der Antriebswelle zugewandten Seite eine Ausnehmung, welche innen als Polygon ausgeformt ist und auf der der Abtriebswelle zugewandten Seite eine Verzahnung auf der Außenfläche des Kupplungskörpers. In die Ausnehmung der Wellenbremskupplung kann ein komplementär geformtes Ende der Antriebswelle gesteckt werden, womit Antriebswelle und Wellenbremskupplung rotationsfest verbindbar sind. Im verzahnten Bereich der Außenfläche des Kupplungskörpers kann die Bremsanbindung erfolgen. Somit ist die Wellenbremskupplung auch als Bremsmitnehmer ausgebildet, übernimmt also zwei Funktionen, zum einen die der Verbindung von Antriebswelle und Abtriebswelle zur Übertragung der Kraft der Antriebseinheit auf die Prozesseinheit und zum anderen die des Bremsmitnehmers, also der Anbindung der Bremsvorrichtung an die Wellenbremskupplung beziehungsweise die Antriebswelle oder die Abtriebswelle.

Besonders bevorzugt ist die Wellenbremskupplung lösbar, wobei sie beispielsweise als Klauenkupplung ausgeformt sein kann. Die Wellenbremskupplung kann jedoch auch teilbar oder nicht lösbar sein. Bevorzugterweise wird eine Klauenkupplung verwendet, um die Verbindung der beiden Wellenenden zu dämpfen, beispielsweise als Schutz vor Erschütterungen der Antriebswelle durch die äußere Umgebung.

In einer bevorzugten Ausführungsform ist die Antriebseinheit ein Elektromotor und/oder die Prozesseinheit ein Getriebe, wobei insbesondere das Getriebe ein Planetengetriebe sein kann. Dabei ist die Bremsvorrichtung zwischen Motor und Getriebe angeordnet, der Motor gehört demnach zur Antriebseinheit, wobei das Getriebe zur Prozesseinheit gehört. Die Bremsvorrichtung ist dabei an die Wellenbremskupplung angebunden, wobei beide zwischen Antriebseinheit und Prozesseinheit angebracht sind. Besonders bevorzugt ist das Getriebe außerdem in ein Rad integriert.

In einer weiteren bevorzugten Ausführungsform ist die Antriebseinheit ein Getriebemotor und die Prozesseinheit als Rad ausgeformt. Dabei sind Motor und Getriebe gemeinsam in der Antriebseinheit angeordnet, wobei die Bremsvorrichtung hierbei zwischen dem Getriebe und der Prozesseinheit angeordnet ist. Die Wellenbremskupplung, welche mit der Bremsvorrichtung verbunden ist, ist ebenso zwischen dem Getriebe der Antriebseinheit und der Prozesseinheit angeordnet.

### Kurze Beschreibung der Zeichnungen

Die folgenden vorteilhaften Ausführungsformen und Ausführungsbeispiele der Erfindung werden nachstehend anhand der Zeichnungen näher erläutert. Es zeigen schematisch:
- Figur 1a: eine schematische Darstellung einer bisherigen Ausführungsform von Kupplung und Bremsvorrichtung zwischen einer Antriebseinheit und einer Prozesseinheit,
- Figur 1b: eine schematische Darstellung einer erfindungsgemäßen Ausführungsform von Wellenbremskupplung und Bremsvorrichtung zwischen einer Antriebseinheit und einer Prozesseinheit,
- Figur 2: eine Explosionsdarstellung der Wellenbremskupplung und Bremsvorrichtung zwischen Antriebseinheit und Prozesseinheit, und
- Figur 3: eine senkrechte Schnittdarstellung durch das Zentrum der Wellenbremskupplung und Bremsvorrichtung mit Antriebseinheit und Prozesseinheit.

### Bevorzugte Ausführungsformen der Erfindung

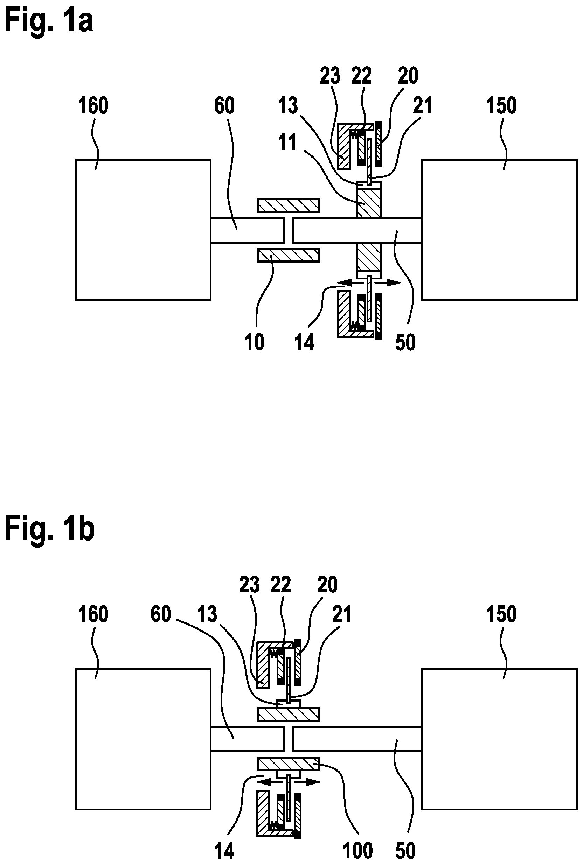

In Figur 1a wird eine Kupplung gemäß dem Stand der Technik gezeigt, wobei die Antriebseinheit 150 über die Abtriebswelle 50 und die Antriebskupplung 10 mit einer Antriebswelle 60 und der Prozesseinheit 160 verbunden sind. Die Antriebseinheit 150 kann hierbei ein Motor, beispielsweise ein Elektromotor oder ein Getriebemotor, sein, von welcher aus Kraft auf die Prozesseinheit 160 übertragen wird, wobei die Prozesseinheit 160 einen vorzugsweise mechanischen Prozess ausführt, und vorzugsweise ein Getriebe oder ein Rad mit oder ohne integriertes Getriebe umfassen kann. Die Abtriebswelle 50 ist zudem über die Bremskupplung 11 und die Verzahnung 13 mit dem Bremsenrotor 21, welcher als Bremsscheibe fungiert, verbunden. Zwischen dem Bremsenrotor 21 und der Antriebseinheit 150 ist die Reibplatte 20 angeordnet, welche mit der Ankerplatte 22 und dem Befestigungsträger 23 den Bremsenstator der Bremsvorrichtung 200 bildet. Die Bauteile des Bremsenstators sind dabei fest, wobei sich der Bremsenrotor gemeinsam mit der Abtriebswelle 50 und der Bremskupplung 11 dreht. Der Bremsenrotor 21 hat eine axiale Verschiebbarkeit 14 gegenüber der Bremskupplung 11 und somit der Abtriebswelle 50.

Figur 1b beschreibt eine Anordnung mit einer Wellenbremskupplung 100 gemäß der vorliegenden Erfindung, wobei die Verbindung zwischen der Antriebseinheit 150 und der Prozesseinheit 160 wie in Figur 1a beschrieben ausgeformt ist. Anstatt der Antriebskupplung 10 und der Bremskupplung 11 ist jedoch eine erfindungsgemäße Wellenbremskupplung 100 mit der Abtriebswelle 50, der Antriebswelle 60 und dem Bremsenrotor 21 verbunden. Der Bremsenrotor 21 ist rotationsfest mit der Wellenbremskupplung 100 verbunden, sodass beide mit der Abtriebswelle 50 und/oder der Antriebswelle 60 rotieren. Der Bremsenstator umfasst die Reibplatte 20, die Ankerplatte 22 und den Befestigungsträger 23. Der Bremsenrotor 21 hat eine axiale Verschiebbarkeit 14 gegenüber der Bremskupplung 11 und somit der Abtriebswelle 50.

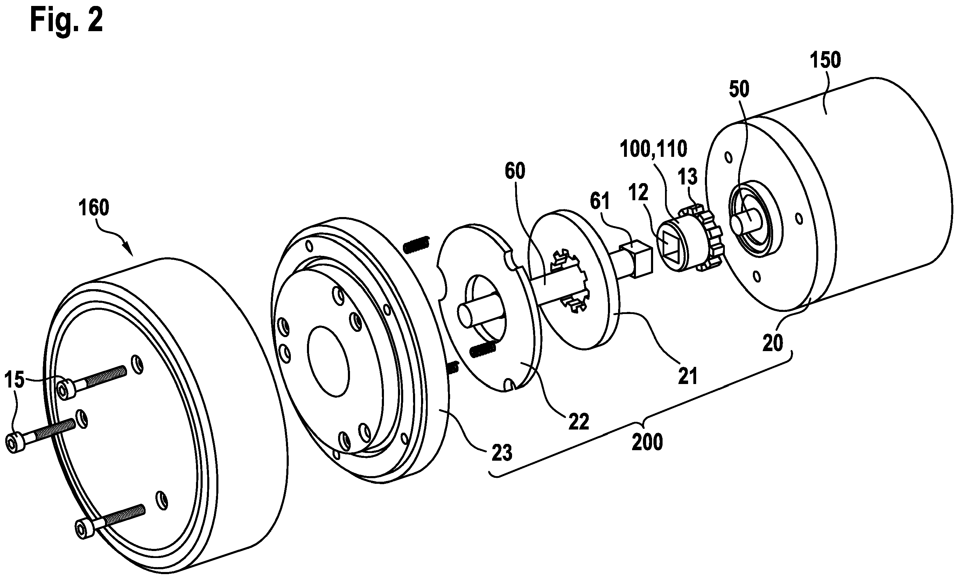

In Figur 2 wird eine Explosionszeichnung der Wellenbremskupplung 100 und Bremsvorrichtung 200 gezeigt, welche zwischen der Antriebseinheit 150 und der Prozesseinheit 160 angeordnet ist. Die Prozesseinheit 160 wird dabei mit drei Schrauben 15, mit dem Befestigungsträger 23 verbunden, welcher mit der Antriebseinheit 150 verbunden ist, womit die Prozesseinheit 160 mit der Antriebseinheit 150 lösbar verbindbar ist. Zwischen der Reibplatte 20 und dem Befestigungsträger 23 befindet sich die Ankerplatte 22, welche über Federn an den Bremsenrotor 21 gepresst wird. Der Bremsenrotor 21 wird so zwischen Ankerplatte 22 und Reibplatte 20 eingeklemmt. Der Bremsenrotor 21 besitzt im Zentrum eine verzahnte Auslassung, in welcher eine Wellenbremskupplung 100 eingepasst werden kann, die an der Außenfläche des Kupplungskörpers 110 beziehungsweise der Wellenbremskupplung 100 oder dem Kupplungsgehäuse über eine Verzahnung 13 verfügt. Die Wellenbremskupplung 100 ist dabei auf Seite der Prozesseinheit 160 mit einer Antriebswelle 60 verbindbar, beispielsweise über ein polygonförmiges Ende 61 der Antriebswelle 60, welches in eine polygonförmige Ausnehmung 12 in der Wellenbremskupplung 100 gesteckt werden kann, sodass beide rotationsfest miteinander verbunden sind. Auf der der Antriebseinheit 150 zugewandten Seite, kann die Wellenbremskupplung 100 mit der Abtriebswelle 50, beispielsweise über einen Presssitz verbunden werden. Die Wellenbremskupplung 100 verbindet die Abtriebswelle 50 der Antriebseinheit 150 mit der Antriebswelle 60 der Prozesseinheit 160. Die Wellenbremskupplung funktioniert durch die Verzahnung 13 an ihrer Außenfläche 110 zusätzlich als Kupplung zum Bremsenrotor 21. Der Befestigungsträger 23, die Ankerplatte 22 und die Reibplatte 20 umfassen im Zentrum eine Auslassung in welcher die Antriebswelle 60 bzw. die Wellenbremskupplung 100 rotieren können. Der Bremsenrotor 21 ist über eine Verzahnung im Zentrum mit der Wellenbremskupplung rotationsfest verbunden.

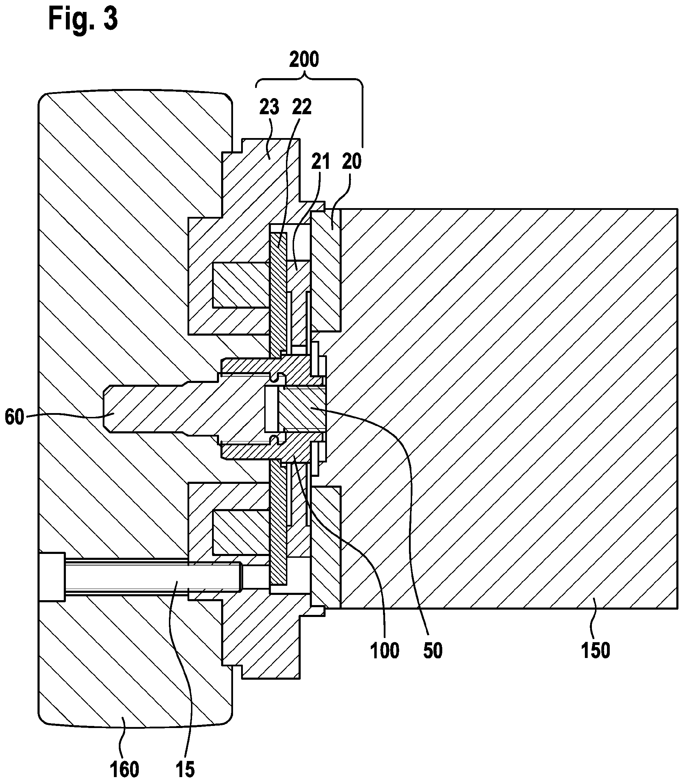

Figur 3 zeigt einen senkrechten Schnitt durch die Antriebseinheit 150, die Bremsvorrichtung 200 und die Prozesseinheit 160, wobei die Prozesseinheit 160 mit Schrauben 15 lösbar an die Bremsvorrichtung 200 angebunden ist. Die Kraft des Antriebs in der Antriebseinheit 150 wird dabei über die Abtriebswelle 50, welche über die Wellenbremskupplung 100 mit der Antriebswelle 60 verbunden ist, und die Antriebswelle 60 auf die Prozesseinheit 160 übertragen. Die Antriebswelle 60 kann dabei gleichzeitig das Sonnenrad eines Planetengetriebes sein, falls die Prozesseinheit 160 ein Planetengetriebe umfasst, also beispielsweise ein Rad mit integriertem Planetengetriebe ist. Zwischen Antriebseinheit 150 und Prozesseinheit 160 ist die Bremsvorrichtung 200 im Bereich der Wellenbremskupplung 100 angeordnet, wobei die Bremsvorrichtung 200 radial gesehen weiter außen als die Wellenbremskupplung 100 angeordnet ist. Der Bremsenrotor 21 greift dabei formschlüssig in die Verzahnung 13 der Wellenbremskupplung 100, welche dadurch gleichzeitig als Bremsenmitnehmer wirkt. Die Reibplatte 20 hingegen, die zwischen Bremsenrotor 21 und Antriebseinheit 150 angeordnet ist, ist direkt mit der Antriebseinheit 150 verbunden. Auf der der Prozesseinheit 160 zugewandten Seite des Bremsenrotors 21 ist die Ankerplatte 22 angeordnet, an welche der Befestigungsträger 23 anschließt.

### Bezugszeichenliste

- 100: Wellenbremskupplung
- 110: Außenfläche des Kupplungskörpers
- 150: Antriebseinheit
- 160: Prozesseinheit
- 200: Bremsvorrichtung

- 10: Antriebskupplung
- 11: Bremskupplung
- 12: polygonförmige Ausnehmung
- 13: Verzahnung
- 14: axiale Verschiebbarkeit
- 15: Schrauben

- 20: Reibplatte
- 21: Bremsenrotor/Bremsscheibe
- 22: Ankerplatte
- 23: Befestigungsträger

- 50: Abtriebswelle
- 60: Antriebswelle
- 61: polygonförmiges Ende

## Patentansprüche

1. Wellenbremskupplung (100), insbesondere für ein Fahrzeug oder ein Flurförderzeug, welche, insbesondere im Betrieb, nicht schaltbar ist, durch welche eine Abtriebswelle (50) einer Antriebseinheit (150) und eine Antriebswelle (60) einer Prozesseinheit (160) miteinander verbindbar sind, wobei zwischen Antriebseinheit (150) und Prozesseinheit (160) eine Bremsvorrichtung (200) angeordnet ist,
**gekennzeichnet dadurch,**
**dass** ein Bremsenrotor (21) der Bremsvorrichtung (200) über die Wellenbremskupplung (100) mit der Abtriebswelle (50) und der Antriebswelle (60) rotationsfest verbunden ist.

2. Wellenbremskupplung (100) gemäß Anspruch 1,
**gekennzeichnet dadurch,**
**dass** die Wellenbremskupplung nicht selbst gelagert ist.

3. Wellenbremskupplung (100) gemäß Anspruch 1 oder 2,
**gekennzeichnet dadurch,**
**dass** die Abtriebswelle (50) und/oder die Antriebswelle (60) und/oder der Bremsenrotor (21) der Bremsvorrichtung (200) gegenüber der Wellenbremskupplung (100) axial in Drehachsenrichtung verschiebbar ist.

4. Wellenbremskupplung (100) gemäß einem der vorhergehenden Ansprüche,
**gekennzeichnet dadurch,**
**dass** die Abtriebswelle (50), die Antriebswelle (60) oder der Bremsenrotor (21) mit der Wellenbremskupplung (100) kraftschlüssig und/oder formschlüssig und/oder stoffschlüssig verbunden ist oder einteilig ausgeformt ist.

5. Wellenbremskupplung (100) gemäß einem der vorhergehenden Ansprüche,
**gekennzeichnet dadurch,**
**dass** die Bremsvorrichtung (200) über eine Außenfläche eines Kupplungskörpers (110), beispielsweise über eine auf der Außenfläche des Kupplungsgehäuses angebrachte Verzahnung, verbunden ist.

6. Wellenbremskupplung (100) gemäß einem der vorhergehenden Ansprüche,
**gekennzeichnet dadurch,**
**dass** die Bremsvorrichtung (200) im Bereich eines vergrößerten Durchmessers der Außenfläche des Kupplungskörpers (110), im Vergleich mit einem Durchmesser der Abtriebswelle (50) und/oder der Antriebswelle (60), angebracht ist.

7. Wellenbremskupplung (100) gemäß einem der vorhergehenden Ansprüche,
**gekennzeichnet dadurch,**
**dass** die Antriebswelle (60) ein Sonnenrad eines Getriebes ist.

8. Wellenbremskupplung (100) gemäß einem der vorhergehenden Ansprüche,
**gekennzeichnet dadurch,**
**dass** die Wellenbremskupplung (100) an einem der Antriebswelle (60) zugewandten Ende eine polygonförmige Vertiefung (12) aufweist und auf der Außenfläche des Kupplungskörpers (110) eine Verzahnung (13) angeordnet ist, wobei die Bremsvorrichtung (200) mit der Verzahnung (13) verbunden ist.

9. Wellenbremskupplung (100) gemäß einem der Ansprüche 1 bis 7,
**gekennzeichnet dadurch,**
**dass** die Wellenbremskupplung (100) als Klauenkupplung ausgeführt ist und auf der Außenfläche des Kupplungskörpers (110) eine Verzahnung (13) angeordnet ist, wobei die Bremsvorrichtung (200) mit der Verzahnung (13) verbunden ist.

10. Wellenbremskupplung (100) gemäß einem der vorhergehenden Ansprüche,
**gekennzeichnet dadurch,**
**dass** die Antriebseinheit (150) ein Elektromotor ist und/oder die Prozesseinheit (160) ein Getriebe ist, insbesondere ein Planetengetriebe.

11. Wellenbremskupplung (100) gemäß einem der vorhergehenden Ansprüche,
**gekennzeichnet dadurch,**
**dass** die Antriebseinheit (150) ein Getriebemotor ist und/oder die Prozesseinheit (160) ein Rad ist.
